# EUROPÄISCHE PATENTSCHRIFT

(11) **EP 1 920 202 B1**
(45) Veröffentlichungstag und Bekanntmachung des Hinweises auf die Patenterteilung: **28.03.2012**
(21) Anmeldenummer: 06776715.2
(22) Anmeldetag: 09.08.2006
(51) Int. Cl.: F25B 35/04, F28F 3/14, F28F 9/18

(54) **ANORDNUNG VON WÄRMETAUSCHERPLATTEN, DIE IN THERMISCHEM KONTAKT MIT EINEM ADSORBENS STEHEN**
HEAT EXCHANGER PLATE ARRANGEMENT WHICH IS IN THERMAL CONTACT WITH AN ABSORBENT
ENSEMBLE DE PLAQUES D'ECHANGE THERMIQUE EN CONTACT THERMIQUE AVEC UN ADSORBANT

(30) Priorität: 10.08.2005 DE 102005037708
(43) Veröffentlichungstag der Anmeldung: 14.05.2008
(73) Patentinhaber: Fraunhofer-Gesellschaft zur Förderung der angewandten Forschung e.V., 80686 München (DE); Albert-Ludwigs-Universität Freiburg, 79085 Freiburg (DE)
(72) Erfinder: SCHMIDT, Ferdinand, 79106 Freiburg (DE); SCHNABEL, Lena, 79110 Freiburg (DE); HENNING, Hans-Martin, 79100 Freiburg (DE); NUNEZ, Tomas, 79106 Freiburg (DE); HENNINGER, Stefan, 79346 Endingen (DE)
(86) Internationale Anmeldenummer: PCT/EP2006/007893
(87) Internationale Veröffentlichungsnummer: WO 2007/017274

(56) Entgegenhaltungen:
- EP-A1- 0 131 270
- WO-A-2004/097323
- DE-A1- 19 728 116
- FR-A1- 2 348 458
- FR-A1- 2 693 542
- US-A- 3 396 782

## Beschreibung

Die Erfindung betrifft eine Anordnung mehrerer von einem Fluid durchströmbarer Wärmetauscherplatten, die mit einem Adsorbens in thermischem Kontakt stehen gemäß dem Oberbegriff des Patentanspruchs 1. DE 10131182 A1 zeigt eine derartige Anordnung.

### Stand der Technik

Bei vielen technischen Adsorptionsprozessen spielt die Leistung, mit der die entstehende Adsorptionswärme über einen Wärmetauscher abgeführt werden kann, eine wichtige Rolle. Analog gilt dies für die Wärmeübertragungsleistung beim Beheizen des Adsorbens über einen Wärmetauscher zur Desorption/Regenerierung des Adsorbens. Von zentraler Bedeutung sind diese Leistungskenngrößen für Adsorptionswärmepumpen und - kältemaschinen sowie verwandte Anwendungen der Adsorption in der Energie- und Klimatisierungstechnik.

Für Adsorptionswärmepumpen und -kältemaschinen arbeiten derzeit verschiedene Firmen intensiv an Konzepten zur Erhöhung der auf das Bauvolumen bezogenen Leistungsdichte, z.B. die Firmen Vaillant, UOP, Mitsubishi und SorTech.

Physikalisch handelt es sich hierbei um das Problem der Optimierung des Wärme- und Stofftransports in der Wärmepumpe. In einem mikroporösen Feststoff (Adsorbens, z.B. Zeolith oder Kieselgel) wird der Dampf des Arbeitsmittels (Adsorptiv: z.B. Wasser, Methanol, Ammoniak) angelagert (adsorbiert) unter Freisetzung von Wärme. Diese Wärme soll über einen Wärmetauscher möglichst schnell an ein Wärmeträgerfluid abgeführt werden.

Zielstellung ist also eine gute thermische Anbindung des mikro- oder mesoporösen Adsorbens (z.B. Zeolith oder Silikagel) an die Oberfläche eines Wärmetauschers (Optimierung der Wärmeleitung) sowie ein guter Wärmeübergang von den Wärmetauscheroberflächen auf das Wärmeträgerfluid. Problematisch ist zum einen die geringe Wärmeleitfähigkeit der hochporösen Adsorbentien selbst, die typischerweise in der Größenordnung von 0,15 W/(mK) liegt, zum anderen der hohe thermische Widerstand an den Punktkontakten zwischen Granalien sowie zwischen Granalien und Wärmetauscher-Oberfläche in einer granularen Adsorbens-Schüttung.

In der DE 101 31 182 A1 ist ein Adsorber mit Anordnung des Adsorbens in gewellten Spalten bekannt. Dazu wird das Adsorbens in Kanäle mit strukturierten Wänden eingebracht. Das Adsorbens kann in Form einer Schüttung zwischen den strukturierten Wänden angeordnet werden. Dabei können zwischen den Kanälen mit dem Adsorbens jeweils Kanäle für ein wärmeübertragendes Medium angeordnet werden. Dabei kann Wärme zwischen benachbarten Kanälen durch die profilierten Wände übertragen werden. Durch die Strukturierung wird der Wärmeübergang verbessert.

In der DE 10119258 A1 von Vaillant wird ein Adsorberaufbau beschrieben, bei dem das Adsorbens in Form von Granalien einlagig auf die Rippen eines Rippenrohres aufgelegt wird. Ein besserer Wärmekontakt des Adsorbens zum Wärmetauscher lässt sich mit einem von Fa. UOP patentierten Aufbau erzielen, der in US 6,102,107 beschrieben ist. Hierbei ist der Adsorber als Bündel paralleler Platten ausgeführt, die durch ein Rohrbündel senkrecht durchstoßen werden. Das Wärmeträgerfluid strömt in den Rohren, und das Adsorbens ist als Schicht beidseitig auf den Platten aufgebracht. Das Adsorbens ist in eine Polymer-Folie eingebunden, deren Aufbau in WO 02/45847 bzw PCT/US01/46413 beschrieben wird.

Auch durch diesen Adsorberaufbau werden jedoch noch nicht die Leistungsdichten erreicht, die für bestimmte Anwendungen gefordert werden (z.B. für die PKW-Klimatisierung).

Die DE 101 59 652 C2 offenbart einen Wärmetauscher, bei dem eine Adsorbereinheit vorhanden ist, die eine äußere Adsorberwandung aufweist und eine schaumstoffartige Matrix, die das Sorptionsmaterial beinhaltet. Die Adsorbereinheit ist in einem Außenbehälter angeordnet, der von einem wärmeabgebenden oder wärmeaufnehmenden Medium durchströmt wird. Die Adsorberwandung und die schaumstoffartige Matrix bilden einen kompakt zusammenhängenden Körper.

Aus der US 3,396,782 ist ein plattenförmiger Metallkörper mit Fluidleitungen bekannt, der mit einem plattenförmigen porösen Körper metallisch verbunden ist. Damit kann Wärme von den Fluidleitungen an ein durch den porösen Körper fließendes Gas effizient übertragen werden.

Aus der EP 0 131 270 geht ein Feststoffadsorber für einen Absorptionskreisprozess hervor. Dabei ist eine Vielzahl von Kammern vorhanden, die durch Zwischenwände eines Wärmetauschers voneinander abgeteilt werden. Die Kammern sind mit Absorberfeststoff gefüllt. Die Zwischenwände sind als Wärmeleitrippen ausgebildet, können aber auch als selbst Wärmetauschmedium führende Hohlleitungen ausgebildet sein.

Ein leistungsfähiger Wärmetauscher ist grundsätzlich aus der DE 27 14 147 bekannt. Dort wird für Anwendungen in Kernkraftwerken vorgeschlagen einen Wärmetauscher zu schaffen, der aus mehreren flachen, geschlossenen und mit parallelen Wänden versehenen Behältern gebildet ist. Diese Behälter sind von einem Strömungsmittel durchströmbar. Die Behälter sind mit einem gemeinsamen Zuführungs- und Abführungssammelkanal für das Strömungsmittel verbunden. Zwischen benachbarten Behältern befinden sich Zwischenräume, die von einem weiteren Strömungsmittel durchströmbar sind.

Um die Leistungsdichte von Adsorptionswärmepumpen weiter zu steigern, sind daher neuartige Konzepte für den Aufbau des Adsorbers erforderlich.

Ein weiteres Problem des Stands der Technik ist die geringe Masse des Sorptionsmaterials im Verhältnis zur Wärmetauschermasse. Ein ungünstiges Massenverhältnis führt dazu, dass zwar eine hohe Leistungsdichte erreicht werden kann, jedoch nur bei einer geringen Effizienz (Coefficient of Performance, COP) wegen des großen Anteils sensibler Wärme im Wärmepumpenzyklus. Zur Vollständigkeit sei angefügt, dass unter dem (thermischen) COP für eine Kältemaschine das Verhältnis aus gewonnener Nutzkälte und hierfür benötigter Antriebswärme verstanden wird, für eine Wärmepumpe ist der COP als Verhältnis der Nutzwärme (auf dem mittleren Temperaturniveau) zur Antriebswärme (auf hohem Temperaturniveau) definiert. Für praktische Anwendungen ist zusätzlich eine Betrachtung des gesamten Energieaufwandes einschließlich der elektrischen Verbräuche von Pumpen etc. erforderlich.

Ein von den oben genannten Problemen weitgehend unabhängiges Problem ist die Begrenzung der Adsorptionsgeschwindigkeit durch den Transport des gasförmigen Adsorptivs zu den Mikro- oder Mesoporen des festen Adsorbens, wo die Adsorptionswärme freigesetzt wird. Dieses Problem tritt insbesondere bei Adsorptiven mit niedrigem Dampfdruck auf, wie z.B. Wasser oder Methanol. Um ein günstiges Massenverhältnis Adsorbens/Wärmetauscher zu erreichen, werden möglichst dicke Adsorbens-Schichten angestrebt, die jedoch je nach Aufbau der Schicht eine hohe Diffusionsbarriere für das adsorbierende Gas darstellen können. Ein Lösungsansatz für dieses Problem wurde in dem schon zitierten UOP-Patent (WO 02/45847 / PCT/US01/46413) aufgezeigt: Eine ausreichende Dampfdurchlässigkeit der Adsorbens-Schicht wird hier durch die Einbindung der Adsorbens-Mikropartikel in eine gut wärmeleitende und dampfdurchlässige Polymermatrix erreicht.

### Aufgabe der Erfindung

Der Erfindung liegt die Aufgabe zugrunde eine einfache Anordnung von Wärmetauscherplatten zu schaffen, mit der die bei der Adsorption freiwerdende Wärme effizient abgeführt werden kann und die bei der Desorption erforderliche Wärme problemlos zugeführt werden kann.

Die Aufgabe wird durch den Gegenstand des Anspruchs 1 gelöst. Vorteilhafte Weiterbildungen finden sich in den abhängigen Ansprüchen.

Erfindungsgemäß wurde erkannt, dass eine so gute thermische Anbindung des Adsorbens an die Wärmetauscheroberfläche erzielt werden kann, dass der Wärmeübergang auf das Wärmeträgerfluid im Wärmetauscher zum limitierenden Faktor für die erreichbare Leistungsdichte der Wärmepumpe wird. Üblicherweise werden für Adsorptionswärmepumpen Wärmetauscher eingesetzt, die als Luft-Waser Wärmetauscher ausgelegt sind. Diese haben nämlich eine große Oberfläche, auf welcher das Adsorbens aufgebracht werden kann. Wegen der niedrigen Wärmekapazität der Luft und des schlechten Wärmeübergangs von der Luft auf den Wärmetauscher genügt bei Luft-Wasser Wärmetauschern im Wärmetauscher selbst eine niedrige Wärmeabfuhr. Daher werden hier zumeist Lamellenwärmetauscher, eingesetzt, bei denen senkrecht zu mit Wasser durchströmten Rohren nicht durchströmte Platten zur Wärmeleitung angeordnet sind. Damit wird zwar eine hohe Oberfläche erreicht. Da die Platten aber nicht durchströmt sind, ist bei höheren Leistungsdichten, wie sie bei der Adsorption auftreten können, die Wärmeabfuhr begrenzt zum einen durch die ringförmigen Kontakte zwischen Wärmetauscherblech und Rohr und zum anderen durch die geringe vom Wärmeträgerfluid benetzte Gesamtoberfläche der Rohre. Erfindungsgemäß wurde erkannt, dass zur besseren Wärmeab- und -zufuhr eine Anordnung von in thermischem Kontakt mit einem Adsorbens stehenden Wärmetauscherplatten, die von einem Wärmeträgerfluid in der Plattenebene durchströmbar sind, geschaffen werden muss. Dabei ist eine Vielzahl von Wärmetauscherplatten, die im Wesentlichen parallel angeordnet sind, mit einem Sammelkanal (1) zur Abfuhr oder Zufuhr des Wärmeträgerfluids vorzusehen. Erst durch diesen Aufbau kann ein für eine Adsorptionswärmepumpe geeigneter Wärmetauscher bereitgestellt werden. Wie eingangs erwähnt, ist ein im Aufbau ähnlicher Wärmetauscher aus der DE 27 14 147 bekannt. Allerdings wird dort die Wärme nicht an oder vom Adsorbens übertragen sondern an ein weiteres Strömungsmedium. Einzelne, aus dem Stand der Technik bekannte, durchströmbare Wärmetauscherplatten, eignen sich nicht für Adsorptionswärmepumpen, da nicht die erforderliche große Oberfläche vorhanden ist. Eine einzelne große Wärmetauscherplatte ist auch ungeeignet, da für Adsorptionswärmepumpen ein kompakter Wärmetauscher bereitgestellt werden muss. Dies einerseits deshalb, damit die Adsorptionswärmepumpe auch bei beengten Platzverhältnissen, etwa im Fahrzeugbereich, eingesetzt werden kann. Zudem erfolgt bei der Adsorption auch eine Erwärmung der Umhüllung. Bei einem größeren Wärmetauscher ist auch eine größere Umhüllung notwendig, so dass eine größere Umhüllung erwärmt wird. Dies wirkt sich ungünstig auf den Wirkungsgrad aus. Um einen guten Wärmetransport zwischen Adsorbens und Wärmetauscherplatte sicherzustellen, ist es darüber hinaus nötig, dass die Wärmetauscherplatte eine sehr große Oberfläche aufweist, an der das Adsorbens mit gutem thermischen Kontakt angebracht werden kann. Eine Möglichkeit ist es, das Adsorbens nach einem der im Stand der Technik bekannten Verfahren aufzukristallisieren. Eine andere Möglichkeit besteht darin, die Adsorbens-Schicht mittels einer mit einem geeigneten Binder versetzten Suspension herzustellen, in die der Wärmetauscher oder die einzelnen Platten eingetaucht werden oder die sonst in geeigneter Weise auf die Metalloberfläche aufgebracht wird. Zur Realisierung der großen Oberfläche werden vorliegend die Bleche der Wärmetauscherplatte auf ihren Außenseiten mit einer Metallschaum- oder schwammstrukur versehen. Vorzugsweise sollte es sich um eine offenporige Struktur, also um eine Metallschwammstruktur, handeln, da bei einer solchen eine besonders große Oberfläche, an der das Adsorbens angebracht werden kann, zur Verfügung steht. Um die Metallschwammstruktur zu realisieren, ist es möglich, entweder vorhandene Metallschwammplatten an das Blech der Wärmetauscherplatte anzubringen oder an den Wärmetauscherplatten ein mit einem Treibmittel versehenes Halbzeug anzubringen und danach einen Aufschäumungsprozess durchzuführen. Die Aufbringung eines Metallschwamms mit einer großen inneren Oberfläche (vorzugsweise größer als 1000 m²/m³) ermöglicht es, die Dicke der Adsorbens-Schicht zu reduzieren (was den Aufkristallisations-Verfahren entgegen kommt), trotzdem noch ein günstiges Massenverhältnis zwischen Adsorbens- und Wärmetauschermasse zu realisieren und die Wärmeleitung gegenüber einer dicken Adsorbens-Schicht drastisch zu verbessern.

Es besteht ein Zielkonflikt zwischen der Maximierung des Wärmeübergangs auf das Wärmeträgerfluid und der Minimierung des Druckverlustes bei der Durchströmung der Platten. Dieser Zielkonflikt kann entschärft werden, wenn für die Führung der Fluidkanäle in den einzelnen Platten eine strömungsoptimierte (z.B. fraktale) Anordnung gewählt wird. Ein Verfahren zur Berechnung und Erzeugung eines solchen Kanalsystems, das sowohl bezüglich des Strömungswiderstandes als auch bezüglich der Wärmeübertragung Platte/Fluid optimiert ist, wird in der DE 103 19 367 A1 und WO 2004/097323 A1 näher beschrieben. In einer bevorzugten Ausführungsform sind daher in dieser Weise optimierte Fluidkanäle in den Wärmetauscherplatten vorgesehen, durch die das Wärmeträgerfluid strömen kann.

In einer weiteren Ausführungsform sind die Wärmetauscherplatten unmittelbar mit einem Sammelkanal zur Zufuhr und Abfuhr des Wärmeträgerfluids verbunden. Gegenüber Anordnungen, bei denen der Sammelkanal am Rande der Wärmetauscherplatten verläuft und jeweils ein eigener kurzer Verbindungskanal zwischen der Wärmetauscherplatte und dem Sammelkanal vorgesehen ist, wird durch die unmittelbare Verbindung mit dem Sammelkanal der Materialaufwand und der Herstellungsaufwand gesenkt; zudem wird der Durchströmungswiderstand für das Fluid erniedrigt. Zusätzliche Elemente, wie beispielsweise die vorgenannten Verbindungskanäle haben auch den Nachteil, dass sie eine Masse aufweisen, die im Betrieb der Wärmepumpen beheizt oder gekühlt werden muss. Dies führt im Betrieb zu unnötigem Energieaufwand.

Es versteht sich, dass in der Regel natürlich zwei Sammelkanäle erforderlich sind, einer zur Abfuhr und einer zur Zufuhr des Wärmeträgerfluids. Da es sich um praktisch identische Kanäle handeln kann, wird im Rahmen dieser Beschreibung im allgemeinen nur ein Sammelkanal und dessen Verbindung mit den Wärmetauscherplatten beschrieben. Selbstverständlich können beide Sammelkanäle gleichermaßen oder unterschiedlich befestigt werden. Ebenso sind auch mehrere Sammelkanäle denkbar.

Eine Möglichkeit den Sammelkanal unmittelbar mit den Wärmetauscherplatten zu verbinden ist es, den Sammelkanal dort, wo der Fluidkanal aus der Platte tritt, direkt anzulöten oder anzuschweißen. Dabei handelt es sich um bewährte Verbindungstechniken, die in der Produktion leicht einsetzbar sind.

Eine besonders geeignete Anordnung ergibt sich, wenn in den an ausgewählter Stelle geöffneten Wärmetauscherplatten Fluidkanäle angeordnet sind, wobei an diesen Stellen Abstandshülsen zwischen den Wärmetauscherplatten vorgesehen sind, so dass eine Aneinanderreihung der Abstandshülsen den Sammelkanal bildet. Die Öffnung der Wärmetauscherplatten an den ausgewählten Stellen kann beispielsweise dadurch erreicht werden, dass die Wärmetauscherplatten an diesen Stellen aufgebohrt werden. Abstandshülsen zwischen den Wärmetauscherplatten bieten sich ohnehin an, um hinreichend Platz für das zwischen den Wärmetauscherplatten anzuordnende Adsorbens zu gewährleisten. Durch diese Ausführungsform können ohnehin vorhandene Elemente zur Bildung des Sammelkanals benutzt werden, wodurch Material und Gewicht eingespart wird. Zur Verbindung der Wärmetauscherplatten mit den Abstandshülsen bieten sich verschiedene Befestigungstechnologien an, beispielsweise das o. g. Anlöten oder Verschweißen.

Eine besonders einfache Verbindung der Wärmetauscherplatten mit den Abstandshülsen wird erreicht, wenn Mittel vorgesehen werden, auf die Wärmetauschplatten Kraft derart auszuüben, dass die Wärmetauscherplatten und die Abstandshülsen derart zusammengepresst werden, dass an den Verbindungsstellen der Abstandshülsen mit den Wärmeaustauschplatten im Wesentlichen kein Wärmeträgerfluid entweichen kann. Mit einer derartigen Anordnung ist es entbehrlich, jede einzelne Abstandshülse an den zugehörigen Wärmetauscherplatten etwa durch Anlöten zu befestigen. Dies verringert den Herstellungsaufwand.

Eine geeignete Realisierung, um Kraft auf die Wärmetauscherplatten auszuüben, ist es, eine durch die einzelnen Wärmetauscherplatten hindurch gehende Verbindung vorzusehen, die zumindest an einem ersten Ende ein Gewinde aufweist, so dass mit einem in Richtung der Sammelkanalachse wirkenden Spannelement auf die an einem ersten Rand angeordnete Wärmetauscherplatte Kraft ausübbar ist, wobei die Verbindung mit der am zweiten Rand angeordneten Wärmetauscherplatte kraftschlüssig verbunden ist. Beispielsweise eignet sich eine Gewindestange, die an beiden Enden eine Mutter aufweist, mit der jeweils die am Rand liegenden Wärmetauscherplatten befestigt werden, und auf diese Kraft ausgeübt wird. Diese Kraft wird durch die vorgesehenen Abstandshülsen auf die übrigen Wärmetauscherplatten weitergeleitet, so dass alle Wärmetauscherplatten und die Abstandshülsen zusammengepresst werden. Somit kann mit handelsüblich erhältlichen einfachen Mitteln eine zuverlässige und leicht zu montierende Verbindung aller Wärmetauscherplatten erreicht werden. Durch die vorhandenen Abstandshülsen wird auch verhindert, dass auf das zwischen den Wärmetauscherplatten angeordnete Adsorbens eine zu hohe Kraft ausgeübt wird, wodurch dieses in unerwünschter Weise zusammengepresst werden könnte, so dass der notwendige Transport des in der Regel dampfförmigen Adsorptivs im Adsorbens über die Maßen behindert würde. Andererseits ist es doch möglich, das Adsorbens auf diese Weise so an die Wärmetauscherplatten anzupressen, dass der Wärmeübergang zwischen Adsorbens und Wärmetauscherplatte einen günstigen Wert einnimmt.

Um ein Entweichen des Wärmeträgerfluids zu vermeiden oder zumindest zu minimieren, können an den Verbindungen der Wärmetauscherplatten mit den Abstandshülsen Dichtungen eingebaut werden. Derartige Dichtungen erlauben bei den Abstandshülsen größere Fertigungstoleranzen; so dass weniger aufwendige und damit billigere herstellbare Abstandshülsen eingesetzt werden können. Zudem wird die durch die Abstandshülsen auf die Wärmetauscherplatten ausgeübte Kraft besser auf die Wärmetauscherplatten verteilt.

Die Wärmetauscherplatten, die üblicherweise aus zwei Blechen bestehen, zwischen denen Fluidkanäle verlaufen, könnten durch das Anpressen der Abstandshülsen auf die Wärmetauscherplatten deformiert werden. Insbesondere könnte die geforderte Dichtigkeit zwischen Sammelkanal und Wärmetauscherplatten dadurch verloren gehen oder es könnten die Fluidkanäle in ihrem Querschnitt so verkleinert werden, dass der Fluidtransport erschwert würde. Letzteres ist insbesondere im Bereich der Abstandshülsen zu vermeiden, da dort ja das Fluid aus den Abstandshülsen in die Wärmetauscherplatte einströmen oder ausströmen soll. Um dies zu vermeiden, kann im Bereich der Abstandshülsen in den Wärmetauscherplatten, also zwischen den Blechen der Wärmetauscherplatte, eine Stützstruktur angeordnet sein. Damit das Fuid durch die Stützstruktur strömen kann, sind in der Stützstruktur einzelne Aussparungen vorhanden, die das Durchströmen des Fluids gestatten, ohne die Stabilität der Stützstruktur zu sehr zu verringern. Eine mögliche Ausgestaltung der Stützstruktur ist ein geeigneter flexibler Ring.

Eine geeignete Anbindung eines Sammelkanals an eine durchströmbare Wärmetauscherplatte ergibt sich, wenn eine Wärmetauscherplatte mit zwei Blechen und zwischen den Blechen liegenden Fluidkanälen verwendet wird. Anschließend ist die Wärmetauscherplatte seitlich zu öffnen. Hierzu können die Bleche der Wärmetauscherplatte seitlich eingekerbt werden. Die Einkerbung sollte so weit gehen, dass ein bis in die Nähe der Kante geführter Fluidkanal geöffnet wird. In die geöffnete Wärmetauscherplatte ist sodann ein Stützblech einzuführen, welches eine Oberflächenstruktur aufweist, in der ein Wärmeträgerfluid fließen kann. Eine solche Oberflächenstruktur kann beispielsweise durch Längsrillen verwirklicht werden. Die Längsrillen sollen so ausgerichtet sein, dass Fluid in die Wärmetauscherplatte, also insbesondere zu den dort befindlichen Fluidkanälen fließt. Anschließend ist die Wärmetauscherplatte in dem Bereich, in dem sie zuvor geöffnet wurde, wieder zu verschließen. Hierzu können die beiden Bleche am Rand zusammengelötet werden. Hier genügt eine gerade und gut zugängige Lötstelle. Der Aufwand hierfür ist gering. Schließlich ist in der Wärmetauscherplatte, in einem Bereich, in dem ein Fluidkanal verläuft und das Stützblech eingeführt ist, eine Öffnung zu erzeugen. Hierzu ist die Wärmetauscherplatte vorzugsweise aufzubohren. Dabei wird zugleich auch im Stützblech eine Öffnung erzeugt. Das neben dem Loch verbleibende Stützblech dient nun als Stabilisierung. Damit können Abstandshülsen auf die Wärmetauscherplatte gedrückt werden, ohne dass eine Verformung der Wärmetauscherplatte erfolgt. Da das Stützblech gerade eingeführt werden kann, also nicht verbogen werden muss, kann ein hartes Material für das Stützblech eingesetzt werden.

Um preisgünstige Wärmetauscherplatten verwenden zu können, bietet es sich an, Wärmetauscherplatten, die nach dem so genannten Rollbond-Verfahren herstellbar sind, einzusetzen. Das heißt, dass zur Fertigung der Wärmetauscherplatte zwei Bleche zusammengewalzt werden, wobei in ausgewählten Bereichen an mindestens einem der Bleche auf der dem anderen Blech zugewandten Seite ein Trennmittel aufgebracht wird, so dass beim nachfolgenden Aufblähen der Bleche sich Kanäle ausbilden.

Es ist möglich, den Sammelkanal im Bereich der Wärmetauscherplatten so zu unterbrechen, dass eine serielle Durchströmung der Wärmetauscherplatten erfolgt. Es soll also gewährleistet werden, dass das Fluid zunächst in die erste Wärmetauscherplatte hineinströmt, diese durchströmt und dann in die nächste Wärmetauscherplatte weiterströmt. Dies kann praktisch dadurch erreicht werden, dass ein durchgängiger Sammelkanal, beispielsweise ein von Abstandshülsen gebildeter Sammelkanal, an den Wärmetauscherplatten eine Füllung aufweist, die nicht flüssigkeitsdurchlässig ist. Beispielsweise kann der vorgenannte als Stützstruktur dienende Ring entsprechend modifiziert werden. Dazu kann der Ring auf der Seite, zu der hin der Sammelkanal unterbrochen sein soll, in seinem inneren Bereich einen geschlossenen runden Abschluss aufweisen. Dann kann das Fluid von einer Seite in das Innere des Rings einströmen. Von dort strömt es durch die Aussparungen in die Wärmetauscherplatte, und wird durch den runden Abschluss auf der anderen Seite des Rings daran gehindert im Sammelkanal weiterzufließen. Prinzipiell ist die serielle Durchströmung auch erreichbar, indem der Sammelkanal durch eine Reihe von U-förmigen Verbindungen zwischen jeweils benachbarten Wärmetauscherplatten gebildet wird. Durch das Sicherstellen einer seriellen Durchströmung der einzelnen Wärmetauscherplatten kann sich zwar der Durchströmungswiderstand für das Wärmeträgerfluid erhöhen. Es bietet aber den Vorteil, dass beispielsweise beim Desorptionsprozess, bei dem durch das Wärmeträgerfluid Wärme zugeführt wird, mit der das Adsorbens desorbiert wird, eine bessere Kühlung des Wärmeträgerfluids erreicht wird. Durch die serielle Durchströmung wird nämlich sichergestellt, dass das Wärmeträgerfluid jeweils durch die gesamte Anordnung von Wärmetauscherplatten hindurchfließt. Damit erfolgt eine Kühlung des Fluids in jeder Wärmetauscherplatte, wodurch eine niedrigere Ausgangstemperatur des Wärmeträgerfluids erreicht wird, als bei einer teilweise parallelen Durchströmung der Wärmetauscherplatten. Entsprechendes gilt bei der Adsorption, bei der die beim Adsorptionsprozess frei werdende Wärme durch das Wärmeträgerfluid abgeführt werden muss. Das beim Eintritt kühle Wärmeträgerfluid wird beim Durchströmen der ganzen Anordnung auf eine höhere Temperatur erwärmt, als bei einer teilweise parallelen Durchströmung der Wärmetauscherplatten. Dies ist insbesondere vorteilhaft, wenn zwei Absorber (d. h. Anordnungen von Wärmetauscherplatten) vorhanden sind, bei der einer desorbiert und der andere adsorbiert wird. Dann kann nach dem Ende des Adsorptionsprozesses des einen Adsorbers und des Desorptionsprozesses des anderen, also am Umschaltpunkt des Wärmepumpenzyklus, das Wärmeträgerfluid zwischen beiden Adsorbern im Kreis gepumpt werden, um eine Wärmerückgewinnung zwischen beiden Adsorbern zu erreichen. Bei der beschriebenen seriellen Anordnung der Wärmetauscherplatten bildet sich dabei eine durch jeden der beiden Adsorber wandernde Temperaturfront aus, die es erlaubt, die ursprünglich vorhandene Temperaturdifferenz zwischen beiden Adsorbern nicht nur auszugleichen, sondern nahezu umzukehren. Dieses Prinzip ist beispielsweise aus dem Tagungsbericht "A Review of Solid-Vapor Adsorption Heat Pumps" des American Institute of Aeronautics and Astronautics, 06.-10. Januar 2003, Autoren M.A. Lambert und B. J. Jones unter dem Stichwort "Thermal Wave Heat Regeneration" beschrieben. Durch diese verbesserte Wärmerückgewinnung lässt sich die Effizienz der Wärmepumpe oder Kältemaschine, fachüblich als COP bezeichnet, erhöhen.

Eine weitere Verbesserung des Wärmetransports ergibt sich, wenn die Wärmetauscherplatte im Bereich zwischen den Fluidkanälen eingeschlitzt und aufgebogen ist. Die dadurch entstehenden, in das Adsorbens hineinragenden, Zinken unterstützten den Wärmetransport. Zudem kann beispielsweise ein Aluminiumschwamm an die Wärmetauscherplatte mit herausragenden Zinken direkt angegossen werden.

Ein leicht handhabbares Adsorbens ergibt sich, wenn das Adsorbens aus mindestens einer Aktivkohlefasermatte aufgebaut ist oder diese enthält. Für die Verwendung von Wasser als Adsorptiv sind chemisch hydrophilierte Aktivkohlefasern besonders geeignet, wie aus der US 5,997,613 bekannt ist. Für die Verwendung mit Methanol als Adsorptiv können auch unbehandelte Aktivkohlefasern geeignet sein.

Um das Adsorptiv, in der Regel handelt es sich um Wasserdampf, effizient in das Adsorbens zu transportieren, ist es günstig, im Adsorbens Kanäle vorzusehen, die einen Dampftransport in das Adsorbens zulassen. Wenn derartige Kanäle vorhanden sind, ist es möglich, das Adsorbens und die Wärmetauscherplatten fest zusammenzupressen, da dennoch ein Transport des Adsorptivs in das Adsorbens möglich ist.

Ohne Einschränkung der Allgemeinheit wird die Erfindung nachfolgend anhand einzelner Figuren näher beschrieben.
Figur 1 zeigt eine Anordnung von parallelen Wärmetauscherplatten mit seitlichen Sammelkanälen.
Figur 2 zeigt einen angebohrten Sammelkanal, der mit den Wärmetauscherplatten verlötet werden kann.
Figur 3 zeigt eine Anordnung von Wärmetauscherplatten mit strömungsoptimierter Kanalstruktur und zwei aus Abstandshülsen gebildeten Sammelkanälen.
Figur 4 zeigt Details des Anschlusses eines Sammelkanals an die Wärmetauscherplatte.
Figur 5 zeigt einen Ring, der eine Verformung der Wärmetauscherplatte an der Anschlussstelle verhindert.

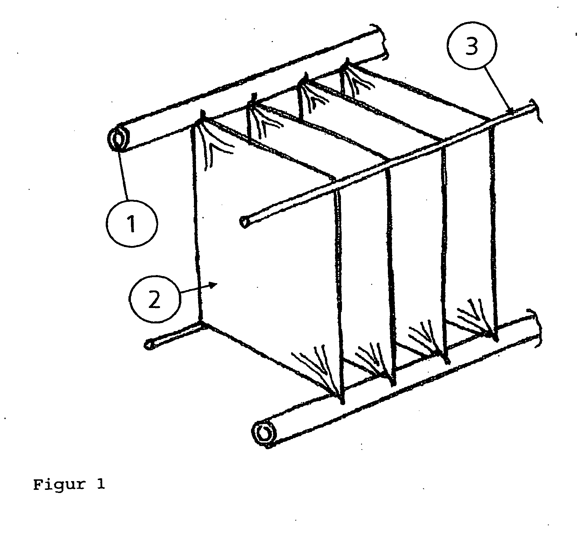

Figur 1 zeigt eine Grundform von Wärmetauscherplatten, die Sammelkanäle zur Zufuhr und Abfuhr des Wärmeträgerfluids aufweisen. Die Sammelkanäle 1 verlaufen jeweils diagonal gegenüber und sind mit den Wärmetauscherplatten 2 unmittelbar verbunden. Bei den Wärmetauscherplatten 2 handelt es sich um so genannte Rollbond-Platten. Derartige Bleche werden hergestellt, indem zwei Bleche zusammengewalzt werden, wobei an den Stellen, an denen die Kanalstruktur entstehen soll, ein Trennmittel aufgetragen wird. Überall dort, wo kein Trennmittel vorhanden ist, verbinden sich die Bleche beim Walzen. Beim nachfolgenden Aufblähen mit einem Druck von beispielsweise 150 bar, entstehen die Fluidkanäle. Bei diesem Herstellungsverfahren sind die Herstellungskosten für eine Wärmetauscherplatte praktisch unabhängig von der Komplexität der Anordnung der Fluidkanäle. Daher können beliebige Strukturen hergestellt werden. An den freibleibenden Ecken der Wärmetauscherplatten 2 sind zwei diagonal gegenüber liegende Stangen 3 zur Fixierung der Plattenstruktur angebracht.

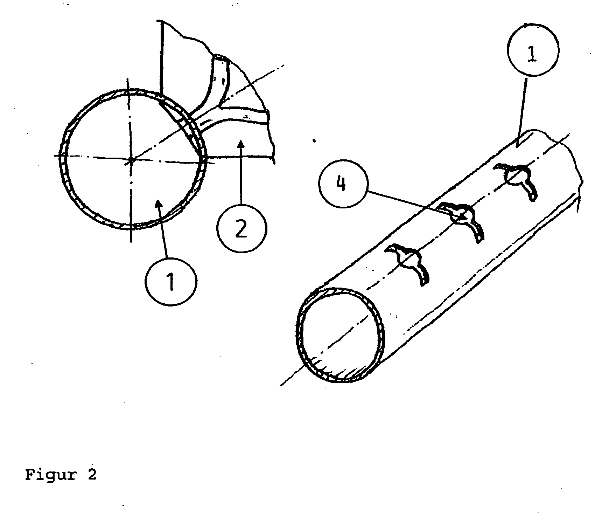

Wie in Figur 2 gezeigt, wird der Sammelkanal 2 zunächst angesägt, angebohrt oder angefräst. Dabei wird eine Öffnung 4 erzeugt, die ein einigermaßen formschlüssiges Einstecken der Wärmetauscherplatten 2 in die Öffnungen 4 gestattet. Anschließend werden der Sammelkanal und die Wärmetauscherplatten zusammengelötet. Damit wird eine mechanisch stabile Verbindung erreicht. Außerdem entweicht dann kein Wärmeträgerfluid mehr.

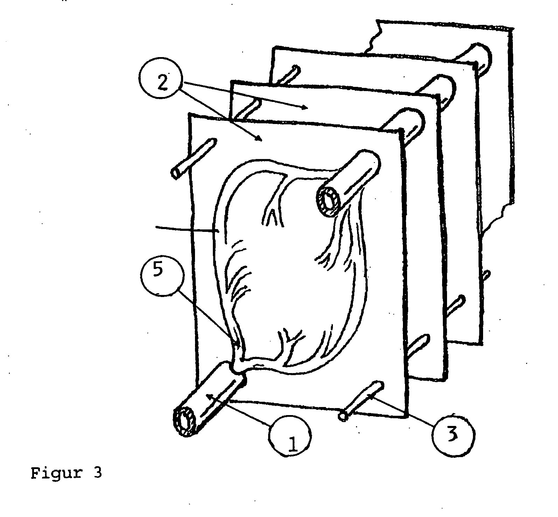

In Figur 3 ist eine Anordnung von Wärmetauscherplatten 2, die aus Rollbond-Blechen gefertigt sind, gezeigt. Bei dieser Anordnung sind die Sammelkanäle 1 durch Abstandshülsen gebildet. Die Sammelkanäle 1 gehen durch zwei diagonal gegenüber liegende Randbereiche der Wärmetauscherplatten 2. Durch die in der Abbildung angedeutete fraktale strömungsoptimierte Fluidkanalstruktur 5 fließt das Wärmeträgerfluid durch die Wärmetauscherplatte 2. An den Ecken, an denen keine Abstandshülsen vorhanden sind, die den Sammelkanal bilden, sind Fixierungsstangen 3 vorgesehen, um die mechanische Stabilität der Anordnung zu erhöhen. Das normalerweise vorhandene Adsorbens ist in den Abbildungen nicht gezeigt. Der Abstand zwischen den einzelnen Wärmetauscherplatten 2 ist so bemessen, dass genügend Platz für das Adsorbens und für die Zuführung des Adsorptivs ist. Im Übrigen sind die Abstände aber möglichst gering gehalten. Damit soll eine kompakte Struktur erreicht werden, die auch möglichst wenig unnötige Masse aufweist.

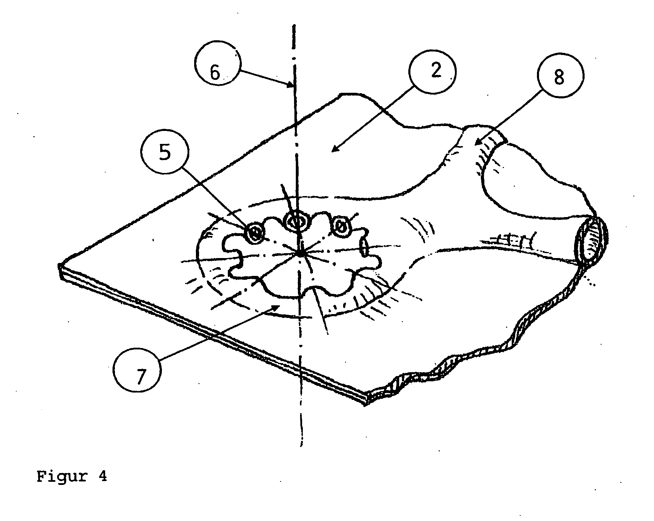

In Figur 4 sind die Details eine Wärmetauscherplatte 2 an der Stelle des Anschlusses an den Sammelkanal 1 gezeigt. Die Achse des Sammelkanals ist mit 6 bezeichnet. Die Fluidkanalstruktur in der Wärmtauscherplatte 2 bildet um die Sammelkanalachse 6 herum einen Ring 7 aus, der eine plane Oberfläche für einen Dichtungsring oder zum Anlöten einer Abstandshülse bietet. Von diesem Ring 7 aus führen Kanäle 5 radial zur Sammelkanalachse 6. Um die Sammelkanalachse 6 herum ist die Wärmetauscherplatte 2 aufgebohrt. Durch die Schnittkante des Bohrlochs entstehen die Eintrittsöffnungen, durch die das Fluid vom Sammelkanal 1 in die Wärmetauscherplatte 2 gelangt. Durch die mit 8 bezeichneten Kanäle wird das Fluid weiter in die Fläche der Platte verteilt.

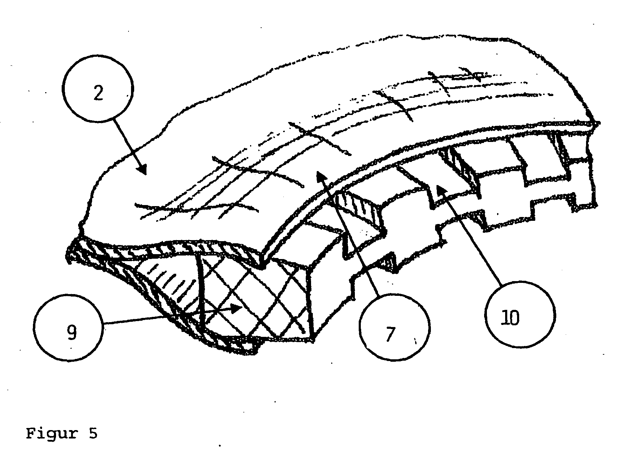

Auch Figur 5 zeigt einen Ausschnitt aus einer Rollbond-Platte 2 an der Anschlussstelle des Sammelkanals 1. Das Loch um die Sammelkanalachse 6 ist hier so groß, dass der ringförmige Fluidkanal 7 angeschnitten wird. Durch Einlegen eines harten, aber genügend flexiblen Stabiliserungsrings 9 in den Zwischenraum der Felge wird die Struktur stabilisiert und der Anpressdruck zur Abdichtung des Anschlusses kann entsprechend erhöht werden. Der Ring muss Durchtrittsöffnungen 10 für das Fluid enthalten.

### Bezugszeichenliste

- 1: Sammelkanal
- 2: Wärmetauscherplatte
- 3: Fixierungsstange
- 4: Öffnung im Sammelkanal
- 5: Fluidkanäle radial zur Sammelachse
- 6: Sammelkanalachse
- 7: Fluidkanalring
- 8: Fluidkanal
- 9: Stabilisierungsring
- 10: Fluiddurchtrittsöffnung im Stabilisierungsring

## Patentansprüche

1. Anordnung von in thermischem Kontakt mit einem Adsorbens stehenden Wärmetauscherplatten (2), die von einem Wärmeträgerfluid in der Plattenebene durchströmbar sind, mit einer Vielzahl von Wärmetauscherplatten, die im wesentlichen parallel angeordnet sind, mit einem Sammelkanal (1) zur Abfuhr oder Zufuhr des Wärmeträgerfluids, **dadurch gekennzeichnet, dass** die Wärmetauscherplatten (2) auf ihren Außenseiten eine Metallschaumstruktur oder Metallschwammstruktur aufweisen, wobei in den Wärmetauscherplatten (2) Fluidkanäle (5)angeordnet sind, durch welche das Wärmeträgerfluid strömen kann.

2. Anordnung nach Anspruch 1, **dadurch gekennzeichnet, dass** die Wärmetauscherplatten (2) unmittelbar mit dem Sammelkanal verbunden sind.

3. Anordnung nach einem der Ansprüche 1 oder 2, **dadurch gekennzeichnet, dass** die Wärmetauscherplatten (2) unmittelbar am Sammelkanal (1) angelötet oder verschweißt sind.

4. Anordnung nach einem der Ansprüche 1 bis 3, **dadurch gekennzeichnet, dass** die Wärmetauscherplatten (2) an geeigneter Stelle geöffnet sind, wobei an diesen Stellen Abstandshülsen zwischen den Wärmetauscherplatten (2) angeordnet sind, so dass eine Aneinanderreihung von Abstandshülsen den Sammelkanal (1) bildet.

5. Anordnung nach Anspruch 4, **dadurch gekennzeichnet, dass** Mittel vorgesehen sind, auf die Wärmetauscherplatten (2) Kraft derart auszuüben, dass die Wärmetauscherplatten (2) und die Abstandshülsen derart zusammengepresst werden, dass an den Verbindungsstellen der Abstandshülsen mit den Wärmetauscherplatten (2) im wesentlichen kein Wärmeträgerfluid entweichen kann.

6. Anordnung nach Anspruch 5, **dadurch gekennzeichnet, dass** als Mittel zur Ausübung der Kraft auf die Wärmetauscherplatten (2) eine durch die einzelnen Wärmetauscherplatten (2) hindurchgehende Verbindung vorgesehen ist, die zumindest an einem ersten Ende ein Gewinde aufweist, so dass mit einem in Richtung der Sammelkanalachse wirkenden Spannelement auf die an einem ersten Rand angeordnete Wärmetauscherplatte (2) Kraft ausübbar ist, wobei die Verbindung mit der am zweiten Rand angeordneten Wärmetauscherplatte (2) kraftschlüssig verbunden ist.

7. Anordnung nach einem der Ansprüche 1 bis 6, **dadurch gekennzeichnet, dass** an den Verbindungen der Wärmetauscherplatten (2) mit den Abstandshülsen Dichtungen eingebaut sind, um ein Entweichen des Wärmeträgerfluids zu vermeiden oder zumindest zu minimieren.

8. Anordnung nach einem der Ansprüche 5 bis 7, **dadurch gekennzeichnet, dass** in den Wärmetauscherplatten (2) eine Stütztstruktur (9) mit Aussparungen für das Fluid vorhanden ist, wobei die Stützstruktur so angeordnet ist, dass die durch das Anpressen der Abstandshülsen auf die Wärmetauscherplatten (2) ausgeübte Kraft kompensiert und eine Deformierung der Wärmetauscherplatten (2) vermieden wird.

9. Anordnung nach einem der Ansprüche 4 bis 8, **dadurch gekennzeichnet, dass** im Bereich der Öffnungen der Wärmetauscherplatte (2) zwischen den Blechen ein Stützblech angeordnet ist, welches eine Oberfächenstruktur aufweist, in der ein Wärmeträgerfluid fließen kann.

10. Anordnung nach einem der Ansprüche 1 bis 9, **dadurch gekennzeichnet, dass** die Wärmetauscherplatten (2) dadurch herstellbar sind, dass zur Fertigung der Wärmetauscherplatte (2) zwei Bleche zusammengewalzt werden, wobei in ausgewählten Bereichen an mindestens einem der Bleche auf der dem anderen Blech zugewandten Seite ein Trennmittel aufgebracht wird, so dass beim nachfolgenden Aufblähen der Bleche sich Kanäle (5) ausbilden.

11. Anordnung nach einem der Ansprüche 1 bis 9, **dadurch gekennzeichnet, dass** die Wärmetauscherplatten (2) dadurch herstellbar sind, dass zur Fertigung der Wärmetauscherplatte (2) zwei Bleche im Bereich der Kanten vakuumdicht verbindbar sind, wobei die Bleche zuvor durch Pressen so verformabar sind, dass die verbundenen Bleche eine Fluidkanalstruktur ergeben.

12. Anordnung nach einem der Ansprüche 1 bis 11, **dadurch gekennzeichnet, dass** der Sammelkanal (1) im Bereich der Wärmetauscherplatten (2) so unterbrochen ist, dass eine serielle Durchströmung der Wärmetauscherplatten (2) erfolgt.

13. Anordnung nach einem der vorhergehenden Ansprüche, **dadurch gekennzeichnet, dass** die Wärmetauscherplatte (2) zwischen den Fluidkanälen (5) eingeschlitzt und umgebogen ist.

14. Anordnung nach einem der vorhergehenden Ansprüche, **dadurch gekennzeichnet, dass** das Adsorbens aus mindestens einer Aktivkohlefasermatte aufgebaut ist oder diese enthält.

15. Anordnung nach einem der vorhergehenden Ansprüche, **dadurch gekennzeichnet, dass** das Adsorbens Kanäle aufweist, die einen Dampftransport in das Adsorbens zulassen.

## Claims

1. An arrangement of heat exchanger plates (2), which are in thermal contact with an adsorbent, and through which a thermal carrier fluid can flow in the plate plane, having a plurality of heat exchanger plates, which are arranged substantially parallel, having a collection channel (1) for the removal or supply of the thermal carrier fluid, **characterized in that** the heat exchanger plates (2) have a metal foam structure or metal sponge structure on their outer sides, fluid channels (5), through which the thermal carrier fluid can flow, being arranged in the heat exchanger plates (2).

2. The arrangement according to Claim 1, **characterized in that** the heat exchanger plates (2) are directly connected to the collection channel.

3. The arrangement according to one of Claims 1 or 2, **characterized in that** the heat exchanger plates (2) are directly soldered or welded on the collection channel (1).

4. The arrangement according to one of Claims 1 to 3, **characterized in that** the heat exchanger plates (2) are open at a suitable point, spacer sleeves being arranged between the heat exchanger plates (2) at these points, so that a series of spacer sleeves forms the collection channel (1).

5. The arrangement according to Claim 4, **characterized in that** means are provided, which exert force on the heat exchanger plates (2) in such a manner that the heat exchanger plates (2) and the spacer sleeves are compressed in such a manner that essentially no thermal carrier fluid can escape at the connection points of the spacer sleeves to the heat exchanger plates (2).

6. The arrangement according to Claim 5, **characterized in that** a connection which extends through the individual heat exchanger plates (2) is provided as the means for exerting the force on the heat exchanger plates (2), which has a thread on at least a first end, so that force can be exerted on the heat exchanger plate (2) arranged on a first edge using a clamping element acting in the direction of the collection channel axis, the connection being connected in a friction-locked manner to the heat exchanger plate (2) arranged on the second edge.

7. The arrangement according to one of Claims 1 to 6, **characterized in that** seals are installed at the connections of the heat exchanger plates (2) to the spacer sleeves, to avoid or at least minimize an escape of the thermal carrier fluid.

8. The arrangement according to one of Claims 5 to 7, **characterized in that** a support structure (9) having openings for the fluid is provided in the heat exchanger plates (2), the support structure being arranged so that the force exerted by the contact pressure of the spacer sleeves on the heat exchanger plates (2) is compensated for and a deformation of the heat exchanger plates (2) is avoided.

9. The arrangement according to one of Claims 4 to 8, **characterized in that** a support sheet is arranged in the area of the openings of the heat exchanger plate (2) between the sheets, which has a surface structure, into which a thermal carrier fluid can flow.

10. The arrangement according to one of Claims 1 to 9, **characterized in that** the heat exchanger plates (2) are producible **in that** two sheets are rolled together to manufacture the heat exchanger plate (2), a separating agent being applied in selected areas to at least one of the sheets on the side facing toward the other sheet, so that channels (5) form during the subsequent inflation of the sheets.

11. The arrangement according to one of Claims 1 to 9, **characterized in that** the heat exchanger plates (2) are producible **in that**, to manufacture the heat exchanger plate (2), two sheets are connectable vacuum-tight in the area of the edges, the sheets previously being deformable by compression so that the connected sheets result in a fluid channel structure.

12. The arrangement according to one of Claims 1 to 11, **characterized in that** the collection channel (1) is interrupted in the area of the heat exchanger plates (2) so that a serial flow through the heat exchanger plates (2) occurs.

13. The arrangement according to one of the preceding claims, **characterized in that** the heat exchanger plate (2) is slotted and bent over between the fluid channels (5).

14. The arrangement according to one of the preceding claims, **characterized in that** the adsorbent is constructed from or contains at least one activated carbon fiber mat.

15. The arrangement according to one of the preceding claims, **characterized in that** the adsorbent has channels, which permit a vapor transport in the adsorbent.

## Revendications

1. Agencement de plaques d'échangeur de chaleur (2), mises en contact thermique avec un adsorbant, lesquelles plaques peuvent être traversées par un fluide caloporteur dans la plan de plaque, comprenant une pluralité de plaques d'échangeur de chaleur, qui sont disposées principalement parallèlement, un canal collecteur (1) pour l'évacuation ou l'arrivée du fluide caloporteur, **caractérisé en ce que** les plaques d'échangeur de chaleur (2) présentent sur leurs faces extérieures une structure de mousse de métal ou une structure d'éponge de métal, des canaux de fluide (5), par lesquels le fluide caloporteur peut circuler, étant disposés dans les plaques d'échangeur de chaleur (2).

2. Agencement selon la revendication 1, **caractérisé en ce que** les plaques d'échangeur de chaleur (2) sont reliées directement au canal collecteur.

3. Agencement selon l'une des revendications 1 ou 2, **caractérisé en ce que** les plaques d'échangeur de chaleur (2) sont brasées ou soudées directement sur le canal collecteur (1).

4. Agencement selon l'une des revendications 1 à 3, **caractérisé en ce que** les plaques d'échangeur de chaleur (2) sont ouvertes en un endroit approprié, des manchons d'espacement étant disposés en ces emplacements entre les plaques d'échangeur de chaleur (2), de sorte qu'un alignement de manchons d'espacement forme le canal collecteur (1).

5. Agencement selon la revendication 4, **caractérisé en ce qu'**il est prévu des moyens pour exercer de la force sur les plaques d'échangeur de chaleur (2), de telle sorte que les plaques d'échangeur de chaleur (2) et les manchons d'espacement sont pressés ensemble, de telle sorte que, pour l'essentiel, aucun fluide caloporteur ne peut s'échapper aux points de liaison des manchons d'espacement avec les plaques d'échangeur de chaleur (2).

6. Agencement selon la revendication 5, **caractérisé en ce qu'**il est prévu comme moyen pour exercer la force sur les plaques d'échangeur de chaleur (2) une liaison passant à travers les plaques individuelles d'échangeur de chaleur (2), laquelle présente un filetage au moins dans une première extrémité, de sorte que de la force peut être exercée avec un élément de serrage agissant en direction de l'axe de canal collecteur sur la plaque d'échangeur de chaleur (2) disposée sur un premier bord, la liaison avec la plaque d'échangeur de chaleur (2) disposée sur le second bord étant reliée par adhérence des forces.

7. Agencement selon l'une des revendications 1 à 6, **caractérisé en ce que** des joints sont montés sur les liaisons des plaques d'échangeur de chaleur (2) avec les manchons d'espacement, afin d'éviter ou tout du moins de minimiser un échappement du fluide caloporteur.

8. Agencement selon l'une des revendications 5 à 7, **caractérisé en ce qu'**une structure de soutien (9) avec des évidements pour le fluide est présente dans les plaques d'échangeur de chaleur (2), la structure de soutien étant disposée de telle sorte que la force exercée par le pressage des manchons d'espacement sur les plaques d'échangeur de chaleur (2) est compensée et qu'une déformation des plaques d'échangeur de chaleur (2) est évitée.

9. Agencement selon l'une des revendications 4 à 8, **caractérisé en ce qu'**une tôle de soutien, qui présente une structure de surface, dans laquelle peut circuler un fluide caloporteur, est disposée dans la zone des ouvertures de la plaque d'échangeur de chaleur (2) entre les tôles.

10. Agencement selon l'une des revendications 1 à 9, **caractérisé en ce que** les plaques d'échangeur de chaleur (2) peuvent être fabriquées par le fait que deux tôles sont laminées ensemble pour fabriquer la plaque d'échangeur de chaleur (2), un agent séparateur étant appliqué dans des zones sélectionnées sur au moins l'une des tôles sur le côté tourné vers l'autre tôle, de sorte que des canaux (5) se forment lors du gonflement consécutif des tôles.

11. Agencement selon l'une des revendications 1 à 9, **caractérisé en ce que** les plaques d'échangeur de chaleur (2) peuvent être fabriquées par le fait que, pour la fabrication de la plaque d'échangeur de chaleur (2), deux tôles peuvent être reliées de façon étanche au vide dans la zone des arêtes, les tôles pouvant être déformées auparavant par pressage, de telle sorte que les tôles reliées donnent une structure de canal à fluide.

12. Agencement selon l'une des revendications 1 à 11, **caractérisé en ce que** le canal collecteur (1) est interrompu dans la zone des plaques d'échangeur de chaleur (2), de telle sorte qu'on a un écoulement continu en série dans les plaques d'échangeur de chaleur (2).

13. Agencement selon l'une des revendications précédentes, **caractérisé en ce que** la plaque d'échangeur de chaleur (2) est entaillée entre les canaux à fluide (5) et est repliée.

14. Agencement selon l'une des revendications précédentes, **caractérisé en ce que** l'adsorbant est conçu à base d'au moins une natte fibreuse en charbon actif ou contient celle-ci.

15. Agencement selon l'une des revendications précédentes, **caractérisé en ce que** l'adsorbant présente des canaux, qui autorisent un transport de vapeur dans l'absorbant.
